# FASCICULE DE BREVET EUROPEEN

(11) **EP 2 137 384 B1**
(45) Date de publication et mention de la délivrance du brevet: **04.08.2010**
(21) Numéro de dépôt: 08788004.3
(22) Date de dépôt: 14.03.2008
(51) Int. Cl.: F01D 11/08, F01D 9/04

(54) **ENSEMBLE D'ANNEAU DE TURBINE POUR TURBINE A GAZ**
TURBINENRINGANORDNUNG FÜR EINE GASTURBINE
TURBINE RING ASSEMBLY FOR GAS TURBINE

(30) Priorité: 15.03.2007 FR 0753842
(43) Date de publication de la demande: 30.12.2009
(73) Titulaire: Snecma Propulsion Solide, 33187 Le Haillan Cedex (FR)
(72) Inventeur: HABAROU, Georges, F-33310 Le Bouscat (FR); MATEO, Julien, F-33290 Le Pian Medoc (FR); BOUILLON, Eric, F-33185 Le Haillan (FR)
(74) Mandataire: Joly, Jean-Jacques
(86) Numéro de dépôt international: PCT/FR2008/050445
(87) Numéro de publication internationale: WO 2008/132364

(56) Documents cités:
- FR-A- 2 559 834
- FR-A- 2 724 973
- US-A- 3 126 149
- US-A1- 2005 129 499

## Description

### Arrière-plan de l'invention

L'invention concerne les anneaux de turbine pour turbines à gaz, qu'il s'agisse de turbines à gaz industrielles ou de turbines à gaz de moteurs aéronautiques.

Dans une turbine à gaz, un anneau de turbine définit une veine d'écoulement de flux gazeux à travers la turbine au niveau d'une roue mobile de celle-ci. Pour assurer le meilleur rendement possible, il est important d'éviter un passage direct des gaz entre les sommets des aubes de la roue de turbine et la surface interne de l'anneau. Ainsi, de façon habituelle, un anneau de turbine est muni à sa face interne d'une couche de matériau abradable avec lequel les sommets d'aubes peuvent entrer en contact sans endommagement notable sous l'effet de variations dimensionnelles d'origine thermique ou résultant de la force centrifuge appliquée aux aubes.

Les anneaux de turbine sont habituellement réalisés en plusieurs secteurs adjacents en matériau métallique.

Il a été proposé par exemple dans le document US 6 758 653 de remplacer le matériau métallique des secteurs d'anneau de turbine par un matériau composite thermostructural, plus particulièrement un matériau composite à matrice céramique (ou CMC). Un tel matériau présente en effet des propriétés mécaniques le rendant apte à constituer des éléments de structure ainsi que la capacité à conserver ces propriétés à température élevée, tout en ayant une masse volumique bien inférieure à celle des matériaux métalliques couramment utilisés pour une telle application.

Le remplacement du matériau métallique de secteurs d'anneau de turbine par un matériau CMC est donc attractif. Toutefois, il est nécessaire de concevoir un montage assez complexe des secteurs d'anneau pour tenir compte de la différence entre les coefficients de dilatation d'un matériau CMC et du matériau d'un support métallique dans lequel les secteurs d'anneau sont montés, tout en minimisant les fuites entre secteurs adjacents.

### Objet et résumé de l'invention

L'invention a pour but de proposer un montage simplifié pour un anneau de turbine en CMC permettant aussi de minimiser les fuites de gaz entre la veine dans laquelle se trouve une roue de turbine en regard de l'anneau et une structure de support de l'anneau.

Ce but est atteint grâce à un ensemble d'anneau de turbine d'une turbine à gaz, comprenant :
- un anneau fendu en une seule pièce en matériau composite à matrice céramique (CMC),
- une pièce en forme de coin en CMC ayant des flancs en contact avec les extrémités de l'anneau en CMC, de part et d'autre de la fente, pour fermer l'anneau en CMC,
- une structure métallique annulaire encerclant l'anneau en CMC au contact de celui-ci sur la plus grande partie de son contour, l'anneau en CMC étant monté avec précontrainte dans la structure métallique,
- au moins un élément exerçant sur la pièce en forme de coin une force de rappel élastique pour maintenir celle-ci en contact avec les extrémités de l'anneau lorsque la fente s'ouvre sous l'effet d'une dilatation différentielle entre la structure métallique annulaire et l'anneau en CMC, et
- au moins un élément de blocage de l'anneau en CMC en rotation autour de son axe.

Ainsi, avec un anneau en une seule pièce, la structure de l'ensemble d'anneau de turbine est simplifiée. En outre, l'utilisation d'un matériau CMC permet de diminuer les besoins en refroidissement, d'où un moindre besoin de flux d'air de refroidissement.

Selon un premier mode de réalisation, la structure métallique comprend deux supports annulaires métalliques entre lesquelles l'anneau en CMC est monté.

L'élément exerçant une force de rappel élastique peut être une lame élastiquement déformable précontrainte en appui, d'une part, sur les supports annulaires et, d'autre part, sur la pièce en forme de coin.

Selon un deuxième mode de réalisation, la structure métallique comprend une couronne métallique encerclant la surface périphérique externe de l'anneau en CMC.

L'élément exerçant une force de rappel élastique peut alors être une languette élastiquement déformable précontrainte solidaire de la couronne métallique et prenant appui sur la pièce en forme de coin.

La structure métallique peut comprendre en outre deux supports métalliques annulaires entre lesquels l'anneau en CMC et la couronne métallique sont montés, permettant une dilatation différentielle au moins en direction radiale entre, d'une part, la couronne métallique et, d'autre part, les supports métalliques annulaires.

Avantageusement, sont prévus des moyens de centrage de la couronne métallique et de l'anneau en CMC.

La couronne métallique peut être montée entre les supports métalliques annulaires par l'intermédiaire de lames élastiquement déformables.

Avantageusement, un joint d'étanchéité est interposé entre l'une au moins des faces latérales de l'anneau en CMC et une face en regard d'un desdits supports métalliques annulaires.

Dans les deux modes de réalisation, de préférence, la pièce en forme de coin présente une face d'extrémité interne venant sensiblement dans la continuité de la surface périphérique interne de l'anneau en CMC à la température à laquelle l'ensemble d'anneau de turbine est normalement exposé en service.

L'anneau en CMC peut être muni d'une couche de matériau abradable sur sa surface périphérique interne.

Avantageusement, le matériau de l'anneau en CMC est un matériau composite à matrice céramique auto-cicatrisante.

Le matériau de l'anneau en CMC peut être muni d'un revêtement formant barrière environnementale de protection contre la corrosion.

Avantageusement, l'anneau en CMC comprend un renfort fibreux formé par tissage tridimensionnel.

Avantageusement encore, l'anneau en CMC et la pièce en forme de coin sont réalisés dans le même matériau.

### Brève description des dessins

L'invention sera mieux comprise à la lecture de la description faite ci-après, à titre indicatif mais non limitatif, en référence aux dessins annexés sur lesquels :
- la figure 1 est une vue très schématique partielle en demi-coupe axiale montrant l'intégration d'un premier mode de réalisation d'un ensemble d'anneau de turbine selon l'invention dans son environnement dans une turbine à gaz;
- la figure 2 est une vue partielle en coupe selon le plan II-II de la figure 1 ;
- les figures 3A et 3B sont des vues partielles en coupe radiale et à échelle agrandie de l'ensemble d'anneau de turbine selon les plans IIIA-IIIA et IIIB-IIIB de la figure 2 ;
- la figure 4 est une vue partielle en perspective à échelle agrandie d'un détail de l'ensemble d'anneau de turbine des figures 1 et 2 ;
- les figure 5A et 5B montrent un détail à échelle agrandie de la vue en coupe de la figure 2, respectivement à froid et dans les conditions d'utilisation de l'ensemble d'anneau de turbine à température élevée ;
- la figure 6 est une vue partielle à échelle agrandie montrant un détail de l'ensemble d'anneau de turbine des figures 1 et 2 ;
- la figure 7 est une vue partielle très schématique en demi-coupe axiale montrant l'intégration d'un deuxième mode de réalisation d'un ensemble d'anneau de turbine selon l'invention dans son environnement dans une turbine à gaz ;
- la figure 8 est une vue en élévation latérale d'un anneau en CMC et d'une couronne métallique selon le deuxième mode de réalisation de l'invention ;
- la figure 9 est une vue en coupe selon le plan IX-IX de la figure 8 ;
- la figure 10 est une vue en perspective partielle à échelle agrandie de l'anneau en CMC et de la couronne métallique encerclant l'anneau selon le deuxième mode de réalisation des figures 7 à 9 ;
- la figure 11 montre un détail à échelle agrandie de la vue en coupe de la figure 9 ;
- les figures 12 et 13 sont des vues en coupe partielles radiales à échelle agrandie montrant des détails de l'ensemble d'anneau de turbine des figures 8 et 9 ; et
- la figure 14 montre un exemple d'armure de type interlock pour le tissage tridimensionnel d'un renfort fibreux d'un anneau en CMC pour un ensemble d'anneau de turbine selon l'invention.

### Description détaillée de modes de réalisation

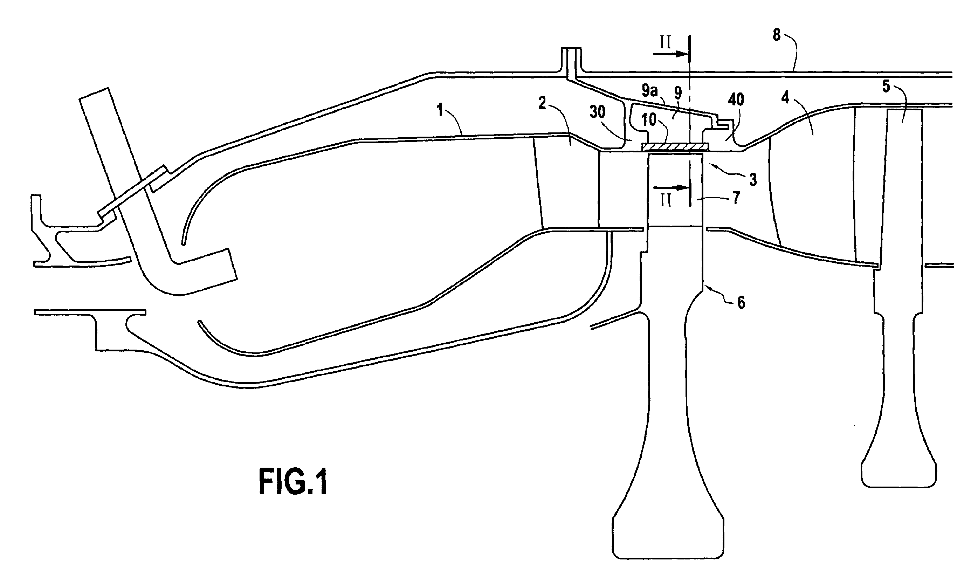

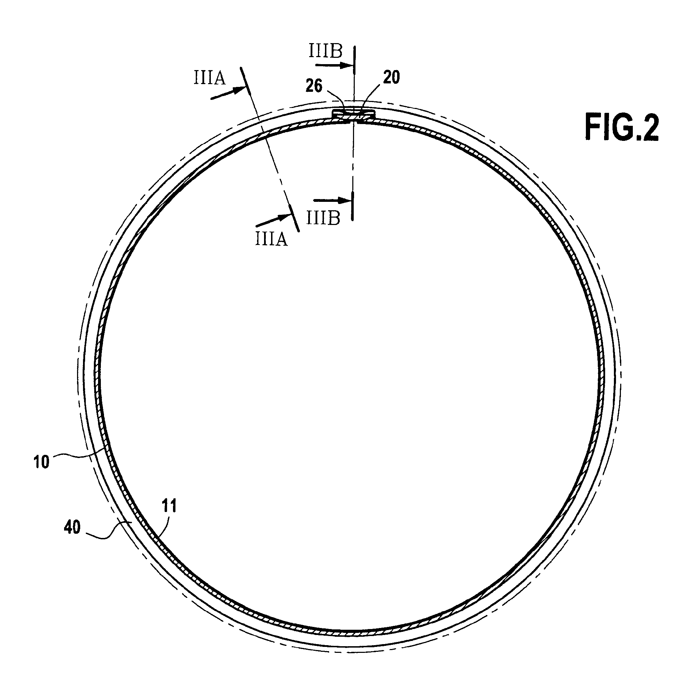

Un premier mode de réalisation de l'invention sera décrit en référence aux figures 1 à 6.

Sur la figure 1, sont représentés de façon très schématique, de l'amont vers l'aval dans le sens d'écoulement de flux gazeux dans une turbine à gaz, une chambre de combustion 1, un distributeur de turbine 2 disposé en sortie de la chambre de combustion, une turbine haute-pression (HP) 3, un redresseur de flux 4 et un premier étage d'une turbine basse-pression (BP) 5.

La turbine HP 3 comprend une roue 6 mobile en rotation portant des aubes 7 et un ensemble d'anneau de turbine.

L'ensemble d'anneau de turbine comprend un anneau de turbine 10 fendu, en une seule pièce, en matériau CMC. L'anneau en CMC est supporté par une structure métallique comprenant des supports annulaires métalliques amont 30 et aval 40 entre lesquels l'anneau 10 est disposé.

Les supports métalliques 30 et 40 sont reliés à un carter de turbine 8. Un espace annulaire 9 est formé à l'extérieur de l'anneau 10, entre les supports 30, 40, délimité par une paroi de fond 9a. De l'air de refroidissement est amené dans l'espace annulaire 9, de façon bien connue en soi.

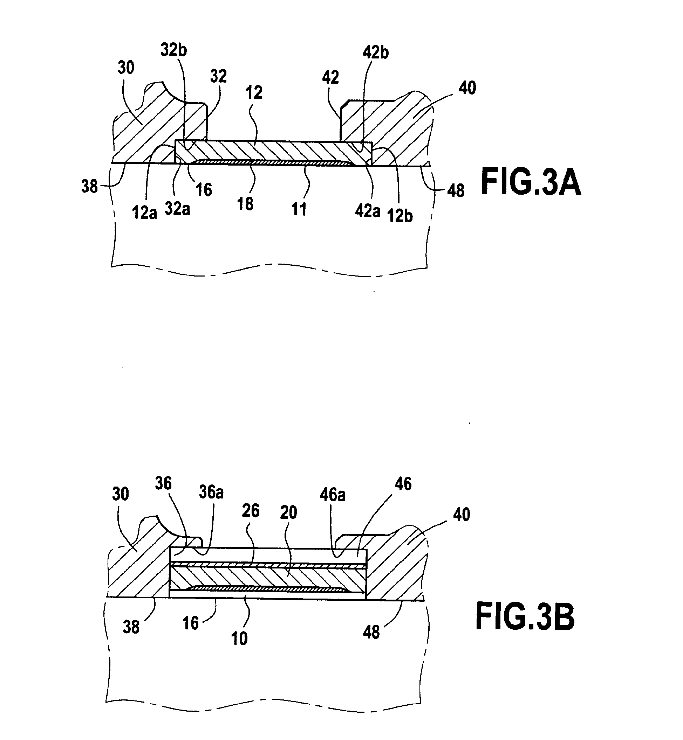

Comme le montrent de façon plus détaillée les figures 3A et 3B, des parties latérales de l'anneau 10 adjacentes à ses faces latérales opposées 12a, 12b s'engagent dans des logements cylindriques formés par des décrochements dans les faces internes 32, 42 des supports 30, 40 situés en regard de l'anneau 10.

Dans ses parties latérales, l'anneau 10 a ses faces latérales 12a, 12b adjacentes aux parois de fond 32a, 42a desdits logements et est en appui par sa surface périphérique externe 14 sur les parois cylindriques périphériques 32b, 42b des mêmes logements (figure 3A). L'anneau fendu 10 est inséré avec précontrainte circonférentielle dans les logements des supports 30, 40, dans la limite de sa capacité de déformation élastique de sorte que, comme expliqué aussi plus loin, le contact avec appui entre l'anneau 10 et les parois cylindriques 32b, 42b reste maintenu en cas de dilatation d'origine thermique des supports 30, 40, le matériau métallique de ceux-ci ayant un coefficient de dilatation supérieur à celui du matériau CMC de l'anneau 10.

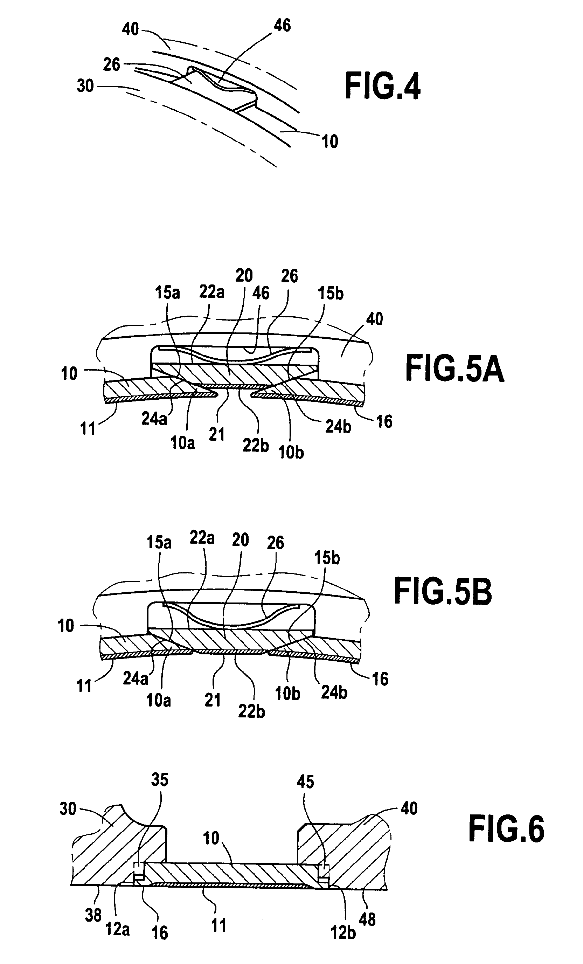

A froid, l'anneau 10 est presque fermé, l'espace entre ses extrémités étant faible. L'anneau 10 a ses parties d'extrémité 10a, 10b biseautées et une pièce de fermeture 20 en forme de coin est appliquée sur les surfaces biseautées 15a, 15b des parties d'extrémité de l'anneau 10 (figures 5A, 5B). La pièce 20 a une section sensiblement en forme de trapèze, avec une face arrière 22a et une face avant 22b de plus petite longueur qui se raccorde à la face arrière 22a par des faces latérales inclinées 24a, 24b qui viennent en appui sur les surfaces biseautées 15a, 15b et ont sensiblement la même inclinaison que celles-ci. La pièce 20 est réalisée en matériau CMC, de préférence le même matériau que celui de l'anneau 10, et a une largeur sensiblement égale à celle de l'anneau 10.

La pièce 20 est appliquée sur les parties d'extrémité biseautées de l'anneau 10 avec une force d'appui élastique exercée par une lame métallique 26 élastiquement déformable qui est logée à l'état précontraint entre la face arrière 22a de la pièce 20 et des parois de fond 36a, 46a de logements 36, 46 aménagés le long d'un secteur dans les supports annulaires 30, 40, à partir de leurs faces internes 32, 42 (figures 3B et 4). Dans l'exemple illustré, la lame 26 a une forme courbe avec sa partie centrale s'appuyant sur la pièce 20 et ses parties d'extrémité s'appuyant sur les parois 36a, 46a. La face avant 22b de la pièce 20 a un profil circulaire de rayon sensiblement égal à celui de la surface périphérique interne 16 de l'anneau 10.

Les figures 5A et 5B montrent les positions relatives de l'anneau 10 et de la pièce 20 respectivement à froid et à chaud, c'est-à-dire à la température de service atteinte lors du fonctionnement à régime normal d'une turbine à gaz dans laquelle l'ensemble d'anneau de turbine est monté. A froid, la pièce 20 se situe en retrait par rapport à la surface interne 16 de l'anneau 10. A chaud, la fente de l'anneau 10 s'ouvre du fait que l'anneau 10, ayant été monté avec précontrainte, "suit" la dilatation des supports annulaires métalliques 30, 40. Les dimensions de la pièce 20 sont choisies de manière qu'à chaud, en fonction de la dilatation différentielle entre l'anneau 10 et les supports 30, 40, la face avant 22b de la pièce 20 se situe sensiblement dans la continuité de la surface interne 16 de l'anneau 10, la lame souple 26 exerçant toujours une force d'appui sur la pièce 20. L'appui permanent avec précontrainte entre la surface externe 14 de l'anneau 10 et les surfaces 32b, 42b assure le centrage de l'anneau 10. Cet appui permanent permet aussi de limiter les fuites entre l'extérieur de l'anneau 10 et la veine de circulation de flux gazeux chaud à l'intérieur de l'anneau 10. Dans le cas d'un ensemble d'anneau de turbine avec refroidissement en service par amenée d'air du côté extérieur de l'anneau de turbine, des fuites d'air de refroidissement dans la veine de flux gazeux chaud pourront si désiré être encore plus minimisées en disposant un joint d'étanchéité annulaire entre l'anneau 10 et le support annulaire aval 40.

A sa surface périphérique interne, l'anneau 10 est muni d'une couche 11 de matériau abradable avec lequel des sommets d'aubes d'une roue mobile entourée par l'anneau 10 peuvent venir en contact sans endommagement notable. Dans l'exemple illustré, la couche 11 est disposée dans un logement annulaire 18 ménagé dans la surface interne 16 sur la plus grande partie de la largeur de l'anneau 10 en direction axiale. De la sorte, la face exposée de la couche 11, les parties de la surface interne 16 situées de part et d'autre que celles-ci ainsi que les surfaces périphériques internes 38, 48 des supports métalliques annulaires 30, 40 définissent une surface continue de veine de flux de gaz chaud ne présentant pas de brusque variation de diamètre. Il est toutefois envisageable de former la couche de matériau abradable 11 en surépaisseur à la surface interne 16 de l'anneau 10. Une couche 21 de matériau abradable est avantageusement formée sur la face avant 22b de la pièce 20 de manière à venir, à chaud, dans la continuité de la couche 11.

Un blocage de l'anneau 10 en rotation par rapport aux supports annulaires 30, 40 ou à au moins l'un d'entre eux est réalisé. On évite ainsi qu'un contact entre un sommet d'aube de roue mobile et le revêtement abradable 11 provoque une rotation de l'anneau. Le blocage en rotation est par exemple réalisé au moyen de dents 35, 45 (figure 6) faisant saillie sur les parois 32, 42 et s'engageant dans des rainures formées dans les faces latérales 12a, 12b de l'anneau 10.

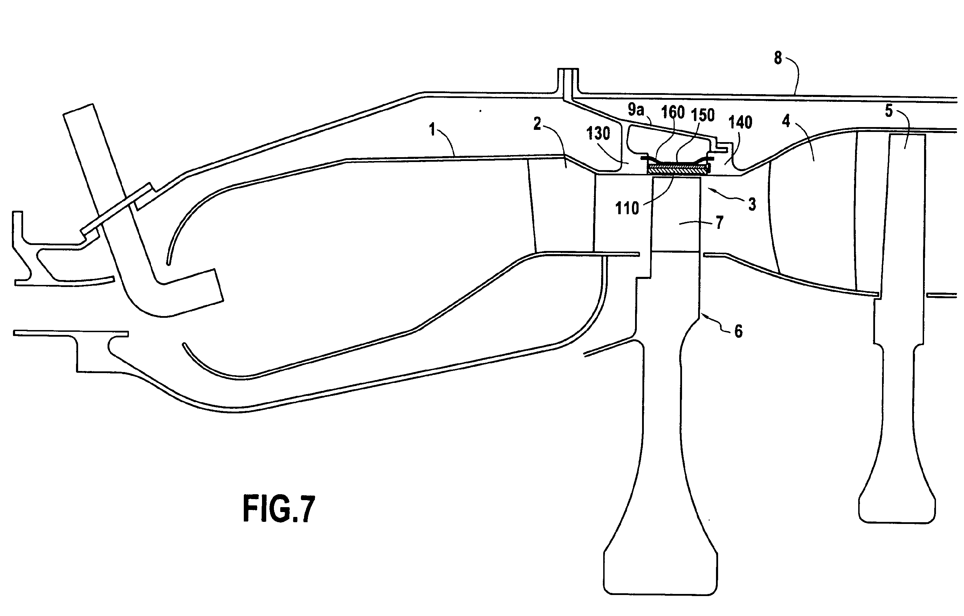

Un deuxième mode de réalisation d'un ensemble d'anneau de turbine selon l'invention sera maintenant décrit en référence aux figures 7 à 14.

La figure 7 est une vue schématique partielle en demi-coupe axiale d'une turbine à gaz qui se distingue de la figure 1 essentiellement par la façon dont l'anneau de turbine fendu en CMC 110 est monté entre des supports métalliques annulaires 130, 140, les autres éléments de la turbine à gaz étant similaires à ceux de la figure 1 et portant les mêmes références.

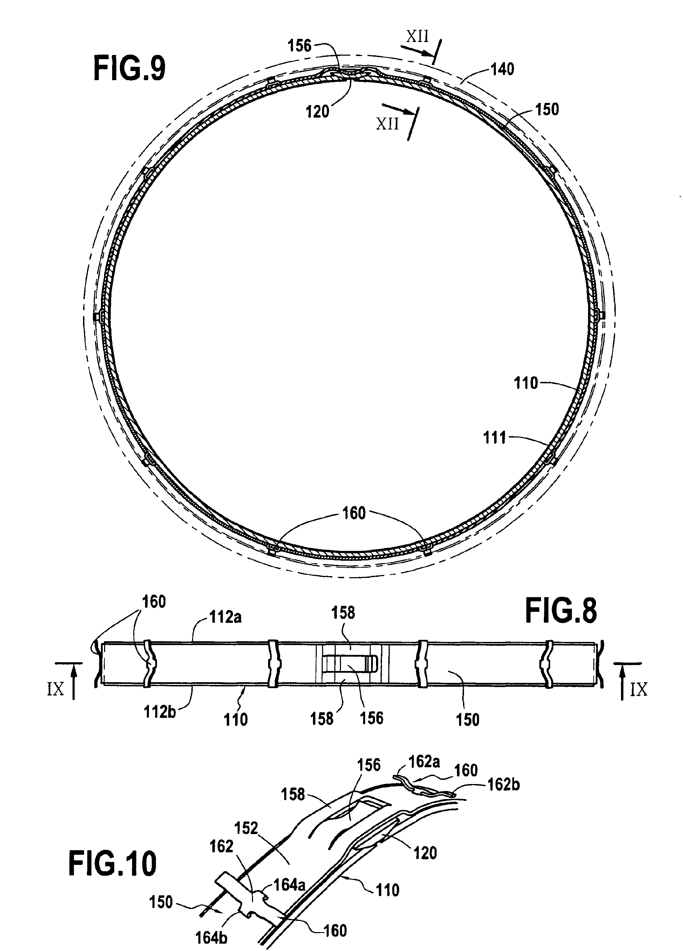

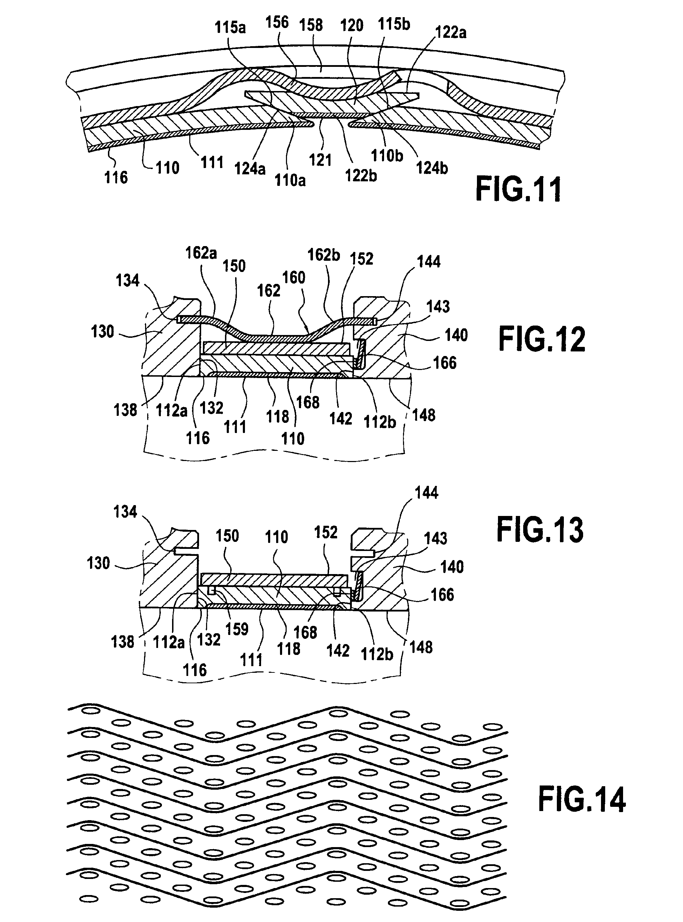

L'anneau fendu 110 est monté avec précontrainte circonférentielle dans une couronne métallique 150, dans la limite de sa capacité de déformation élastique. Le montage est réalisé pour que le contact avec appui entre la surface périphérique externe de l'anneau 110 et la surface interne de la couronne 150 reste maintenu en cas de dilatation d'origine thermique aux températures rencontrées en service par l'ensemble d'anneau de turbine, le matériau métallique de la couronne 150 ayant un coefficient de dilatation supérieur à celui du matériau CMC de l'anneau 110. La couronne 150 a une largeur légèrement inférieure à celle de l'anneau 110, ses bords latéraux se situant en retrait des faces latérales 112a, 112b de l'anneau 110 (figures 8, 12).

A froid, l'anneau 110 est presque fermé, l'espace entre ses extrémités étant faible. L'anneau 110 a ses parties d'extrémité 110a, 110b biseautées et une pièce de fermeture 120 en forme de coin est appliquée sur les surfaces biseautées 115a, 115b des parties d'extrémité de l'anneau (figures 9, 10, 11). La pièce 120 est semblable à la pièce 20 du mode de réalisation précédent. Elle présente une face arrière 122a, une face avant 122b ayant une courbure sensiblement égale à celle de la surface périphérique interne 116 de l'anneau 110, et des faces latérales 124a, 124b venant en appui sur les surfaces biseautées 115a, 115b. La pièce 120 est réalisée en matériau CMC, de préférence le même que celui de l'anneau 110 et a une largeur sensiblement égale à celle de l'anneau 110.

La pièce 120 est appliquée sur les parties d'extrémité biseautées de l'anneau 110 avec une force d'appui élastique exercée par une languette 156 élastiquement déformable. Comme le montrent les figures 10 et 11, la couronne 150 s'écarte de l'anneau sur une partie 158 de plus grand diamètre qui se raccorde avec le reste de la couronne et ménage un espace pour la pièce 120 au niveau des parties d'extrémité de l'anneau 110, celui-ci restant, sur la plus grande partie de son contour, en appui sur la surface interne de la couronne 150. Dans l'exemple illustré, la languette 156 est découpée en direction circonférentielle dans la zone médiane de la partie 158 de la couronne 150 en restant raccordée à celle-ci à une extrémité. Après découpe, la languette est déformée pour être recourbée et s'appuyer sur la pièce 120 en exerçant sur celle-ci une force élastique, y compris lorsque la pièce 120 vient à chaud obturer la fente de l'anneau 110 avec la face avant 122b sensiblement dans la continuité de la surface interne 116 de l'anneau 110. On pourra bien entendu utiliser d'autres formes de pièces élastiquement déformables exerçant une force d'appui sur la pièce 120, par exemple une lame semblable à celle du mode de réalisation précédent.

L'anneau 110 muni de la couronne 150 est disposé entre les supports annulaires métalliques 130, 140, les faces latérales 112a, 112b de l'anneau étant adjacentes aux faces latérales internes 132, 142 des supports 130, 140 situées en regard de l'anneau 110.

L'anneau 110 muni de la couronne 150 est maintenu entre les supports 130, 140 au moyen de lames métalliques 160 élastiquement déformables (figures 8, 10, 12) s'étendant radialement. Une pluralité de lames 160 réparties de préférence de façon régulière autour de l'axe de l'anneau 110 sont prévues, leur nombre étant au moins égal à 3. Chaque lame 160 a une partie centrale 162 liée à la surface externe 152 de la couronne 150 qui se raccorde à des parties latérales recourbées 162a, 162b s'écartant de la surface 152. Les extrémités des parties latérales 162a, 162b sont engagées dans des évidements correspondants 134, 144 formés dans les faces 132, 142 des supports 130, 140. Les lames 160 sont liées à la surface externe 152 de la couronne 150 par exemple par clipsage, soudage ou rivetage. Dans l'exemple illustré, les lames 160 sont munies de crochets 164a, 164b, de part et d'autre de leur partie centrale 162, lesquels crochets sont engagés avec déformation élastique dans des logements formés à la surface externe 152 de la couronne 150 (figure 10).

Les lames 160 permettent de conserver le centrage voulu de l'anneau 110 muni de la couronne 150 tout en autorisant une dilatation différentielle en direction radiale entre, d'une part, les supports annulaires 130, 140 et, d'autre part, la couronne 150. Comme indiqué plus haut à propos du premier mode de réalisation, il peut être souhaitable de minimiser ou contrôler les fuites entre l'extérieur de l'anneau 110 et la veine de flux de gaz à chaud à l'intérieur de l'anneau 110, au moins du côté du support annulaire aval 140. A cet effet, une rondelle élastique 166 est disposée dans une gorge 143 formée dans la surface interne 142 du support annulaire 140 (figures 12, 13). La rondelle élastique est précontrainte et s'appuie à son extrémité circonférentielle extérieure contre le fond de la gorge 143 et, à son extrémité circonférentielle intérieure, contre une rondelle d'appui 168 appliquée contre la face latérale 112b de l'anneau 110. En variante, un joint d'étanchéité à profil en ω pourrait être utilisé.

Des perçages pourront être pratiqués dans la rondelle élastique 166 afin d'équilibrer la pression dans la gorge 143 de part et d'autre de la rondelle 166 et d'assurer un débit d'air de refroidissement pour le support annulaire 140.

A sa périphérie interne, l'anneau 110 est muni d'une couche de matériau abradable 111. Comme dans le mode de réalisation précédent, la couche 111 est disposée dans un logement annulaire 118 formé dans la surface interne 116 de l'anneau 110 de manière à définir, avec les surfaces périphériques internes 138, 148 des supports métalliques annulaires 130, 140 une surface continue de veine de gaz chaud sans variation brusque de diamètre. Un revêtement abradable similaire 121 est formé sur la face avant 122a de la pièce 120. On pourrait bien entendu envisager de former un revêtement 111 en surépaisseur à la surface interne 116 de l'anneau 110.

Comme dans le mode de réalisation précédent, on réalise un blocage de l'anneau 110 muni de la couronne 150 par rapport aux supports 130, 140 ou par rapport à au moins l'un d'entre eux. Le blocage en rotation est réalisé par exemple au moyen de pions 159 (figure 13) solidaires de la couronne 150 et s'engageant dans des trous borgnes formés dans la face externe de l'anneau 110. Quant à la couronne 150, elle est bloquée en rotation par rapport aux supports 130, 140 au moyen des lames 160 dont les extrémités sont engagées dans les évidements 134, 144 des faces 132, 142. On pourrait, en variante, avoir des évidements 134, 144 sous forme de gorges ou rainures continues auquel cas le blocage de la couronne 150 par rapport aux supports 130, 140 est réalisé par d'autres moyens, par exemple en formant sur au moins l'une des faces 132, 142 une ou plusieurs dents s'engageant chacune dans une encoche formée dans la couronne 150 et éventuellement l'anneau 110.

Le matériau CMC de l'anneau 10 ou 110 et de la pièce 20 ou 120 peut être de type connu en soi obtenu par densification d'une préforme fibreuse par une matrice céramique, la préforme fibreuse fournissant le renfort fibreux du matériau. Les fibres de la préforme sont des fibres réfractaires telles que des fibres en carbone ou des fibres en céramique, par exemple en carbure de silicium (SiC). On notera que le terme «céramique» recouvre aussi les composés de type oxydes réfractaires.

Une première étape peut consister à réaliser une préforme fibreuse qui, après densification par la matrice céramique, permet d'obtenir une pièce dans laquelle l'anneau 10, 110 ou la pièce en forme de coin 20, 120 peut être usiné ou découpé. On notera que l'usinage est de préférence réalisé à un stade de densification intermédiaire pour faire en sorte qu'après une étape finale ultérieure de densification, les fibres de la préforme fibreuse sont bien protégées par une couche de matrice.

Un mode de réalisation d'une préforme fibreuse pour l'anneau 10 ou 110 consiste à réaliser une bande d'épaisseur voulue par tissage tridimensionnel. La figure 14 illustre schématiquement une armure de type interlock utilisable pour le tissage tridimensionnel (les fils de trame étant en coupe). Les parties d'extrémité de la bande tissée pourront être réalisées avec une épaisseur décroissante correspondant aux extrémités biseautées de l'anneau. Une épaisseur décroissante peut être obtenue lors du tissage en diminuant progressivement le nombre de couches de fils de chaîne et de trame. Des armures de tissage tridimensionnel autres que des armures de type interlock peuvent être utilisées telles que des armures multicouches, par exemple de type multi-toile ou multi-satin comme celles décrites dans le document WO 2006/136755.

D'autres modes de réalisation d'une préforme fibreuse pour l'anneau 10 ou 110 peuvent être envisagés. On pourra par exemple former une bande d'épaisseur voulue en superposant plusieurs strates fibreuses, par exemple des bandes de tissu, et en liant les bandes entre elles, par exemple par aiguilletage.

La matrice céramique peut être une matrice céramique réfractaire, telle que SiC ou, avantageusement, une matrice céramique "auto-cicatrisante". Une matrice céramique "auto-cicatrisante" est obtenue en réalisant au moins une phase constitutive de la matrice en un matériau capable, par passage à l'état visqueux dans un certain domaine de températures, de combler ou "cicatriser" des fissures s'étant formées dans la matrice notamment sous l'effet de cyclages thermiques. Des compositions ayant des propriétés "auto-cicatrisantes" sont notamment des compositions vitreuses, par exemple de type aluminosilicate, ou des compositions capables, sous l'effet d'une oxydation, de former des compositions vitreuses. Des phases de matrice en carbure de bore B₄C ou en un système ternaire Si-B-C sont des précurseurs de compositions vitreuses. La matrice peut être formée par infiltration chimique en phase gazeuse, ou CVI ("Chemical Vapor Infiltration"), et un revêtement d'interphase par exemple en carbone pyrolytique PyC ou nitrure de bore BN peut être préalablement formé sur les fibres de la préforme. La préforme fibreuse peut être maintenue dans la forme voulue pendant une première phase de densification jusqu'à consolidation de la préforme, c'est-à-dire une densification partielle suffisante pour que la préforme puisse conserver ensuite sa forme sans l'assistance d'un outillage. Des procédés de réalisation de matériau composite à matrice céramique "auto-cicatrisante" sont décrits notamment dans les documents US 5 965 266, US 6 291 058 et US 6 068 930.

Après densification et usinage, le matériau CMC peut être protégé contre la corrosion par une barrière de protection environnementale, de façon connue en soi. Une telle barrière peut par exemple comprendre une couche externe en zircone stabilisée à l'yttrium et une sous-couche de liaison en mullite. Il est connu aussi d'apporter la résistance contre la corrosion par une couche en un composé de type aluminosilicate de métal alcalino-terreux, tel que le composé Ba_{0,75}.Sr_{0,25}.Al₂O₃(SiO₂)₂ désigné couramment sous l'abréviation BSAS. Dans le cas d'un matériau CMC contenant du silicium, une couche de barrière chimique peut alors être interposée, par exemple en mullite ou en un mélange de mullite + BSAS tandis qu'une sous-couche de liaison ou d'accrochage en Si peut être prévue. Une couche de barrière thermique en zircone stabilisée à l'yttrium peut être formée sur la couche de BSAS. Des barrières environnementales convenant particulièrement pour des matériaux CMC à matrice contenant du silicium sont décrites notamment dans les documents US 6 866 897, EP 1 416 066, US 6 759 151, WO 2007/116176 et WO 2008/078024. Le dépôt des différentes couches de la barrière environnementale peut être effectué par dépôt physique en phase gazeuse, par exemple par projection plasma ou plasma thermique, ou par dépôt chimique en phase gazeuse, ou CVD ("Chemical Vapor Deposition") éventuellement assisté par plasma.

La couche de matériau abradable est par exemple en un oxyde réfractaire tel que zircone ou alumine. Elle peut être formée par dépôt physique en phase gazeuse, par exemple par projection plasma ou plasma thermique. Le matériau abradable est de préférence poreux. De façon connue, la porosité peut être contrôlée en déposant le matériau de la couche abradable avec une poudre de matière éliminable par la chaleur, par exemple une poudre de polyéthylène.

La couche de matériau abradable peut être formée au-dessus de la barrière de protection environnementable.

La pièce en forme de coin 20 ou 120 avec la couche de matériau abradable 21, 121 peut être obtenue d'une façon similaire à celle décrite pour l'anneau 10 ou 110. Pour la réalisation de la préforme fibreuse, on pourrait toutefois former une bande de texture fibreuse d'épaisseur voulue par tissage tridimensionnel ou par superposition et liaison entre elles de strates fibreuses, puis découper dans cette bande des préformes ayant des formes correspondant à celle des pièces 20, 120 désirées.

L'ensemble d'anneau de turbine selon l'invention convient particulièrement pour une turbine HP d'une turbine à gaz. Il peut toutefois être utilisé aussi pour une turbine BP ou une turbine intermédiaire dans le cas d'une turbine à gaz à plus de deux étages.

## Revendications

1. Ensemble d'anneau de turbine d'une turbine à gaz, comprenant :
- un anneau fendu (10 ; 110) en une seule pièce en matériau composite à matrice céramique (CMC),
- une pièce (20 ; 120) en forme de coin en CMC ayant des flancs en contact avec les extrémités de l'anneau, de part et d'autre de la fente, pour fermer l'anneau,
- une structure métallique annulaire de support (30, 40 ; 150) encerclant l'anneau en CMC au contact de celui-ci sur la plus grande partie de son contour, l'anneau en CMC étant monté avec précontrainte dans la structure métallique,
- au moins un élément (26 ; 156) exerçant sur la pièce en forme de coin une force de rappel élastique pour maintenir celle-ci en contact avec les extrémités de l'anneau en CMC lorsque la fente s'ouvre sous l'effet d'une dilatation différentielle entre la structure métallique annulaire et l'anneau en CMC, et
- au moins un élément (35, 45 ; 159) de blocage de l'anneau en CMC en rotation autour de son axe.

2. Ensemble d'anneau de turbine selon la revendication 1, **caractérisé en ce que** la structure métallique comprend deux supports annulaires métalliques (30, 40) entre lesquelles l'anneau (10) en CMC est monté.

3. Ensemble d'anneau de turbine selon la revendication 2, **caractérisé en ce que** l'élément exerçant une force de rappel élastique est une lame (26) élastiquement déformable précontrainte en appui, d'une part, sur les supports métalliques annulaires (30, 40) et, d'autre part, sur la pièce (20) en forme de coin.

4. Ensemble d'anneau de turbine selon la revendication 1, **caractérisé en ce que** la structure métallique comprend une couronne métallique (150) encerclant la surface périphérique externe de l'anneau (110) en CMC.

5. Ensemble d'anneau de turbine selon la revendication 4, **caractérisé en ce que** l'élément exerçant une force de rappel élastique est une languette (156) élastiquement déformable précontrainte solidaire de la couronne métallique (150) et prenant appui sur la pièce (20) en forme de coin.

6. Ensemble d'anneau de turbine selon la revendication 5, **caractérisé en ce que** la structure métallique comprend en outre deux supports métalliques annulaires (130, 140) entre lesquelles l'anneau (110) en CMC et la couronne métallique (150) sont montés, permettant une dilatation différentielle au moins en direction radiale entre, d'une part, la couronne métallique et, d'autre part, les supports métalliques annulaires (130, 140).

7. Ensemble d'anneau de turbine selon la revendication 6, **caractérisé en ce qu'**il comprend des moyens (160) de centrage de la couronne métallique (150) et de l'anneau (110) en CMC.

8. Ensemble d'anneau de turbine selon l'une quelconque des revendications 5 et 6, **caractérisé en ce que** la couronne métallique (150) est montée entre les supports métalliques annulaires (130, 140) par l'intermédiaire de lames (160) élastiquement déformables.

9. Ensemble d'anneau de turbine selon l'une quelconque des revendications 6 à 8, **caractérisé en ce qu'**un joint d'étanchéité (166) est interposé entre l'une au moins des faces latérales de l'anneau (110) en CMC et une face en regard d'un desdits supports métalliques annulaires.

10. Ensemble d'anneau de turbine selon l'une quelconque des revendications 1 à 9, **caractérisé en ce que** la pièce en forme de coin (20 ; 120) présente une face d'extrémité interne venant sensiblement dans la continuité de la surface périphérique interne de l'anneau (10 ; 110) en CMC à la température à laquelle l'ensemble d'anneau de turbine est normalement exposé en service.

11. Ensemble d'anneau de turbine selon l'une quelconque des revendications 1 à 10, **caractérisé en ce qu'**il comprend une couche de matériau abradable (11 ; 111) sur la surface périphérique interne de l'anneau (10 ; 110) en CMC.

12. Ensemble d'anneau de turbine selon l'une quelconque des revendications 1 à 11, **caractérisé en ce que** le matériau de l'anneau (10 ; 110) en CMC est un matériau composite à matrice céramique auto-cicatrisante.

13. Ensemble d'anneau de turbine selon l'une quelconque des revendications 1 à 12, **caractérisé en ce que** le matériau de l'anneau (10 ; 110) en CMC est muni d'un revêtement formant barrière environnementale de protection contre la corrosion.

14. Ensemble d'anneau de turbine selon l'une quelconque des revendications 1 à 13, **caractérisé en ce que** l'anneau (10 ; 110) en CMC comprend un renfort fibreux formé par tissage tridimensionnel.

15. Ensemble d'anneau de turbine selon l'une quelconque des revendications 1 à 14, **caractérisé en ce que** l'anneau (10 ; 110) en CMC et la pièce en forme de coin (20 ; 120) sont réalisés dans le même matériau.

16. Turbine à gaz comprenant un ensemble d'anneau de turbine selon l'une quelconque des revendications 1 à 15.

## Claims

1. A turbine ring assembly for a gas turbine, the assembly comprising:
· a one-piece split ring (10; 110) of ceramic matrix composite (CMC) material;
· a wedge-shaped CMC part (20; 120) having flanks in contact with the ends of the ring on either side of the split, so as to close the ring;
· an annular metal support structure (30, 40; 150) surrounding the CMC ring, in contact therewith over a major fraction of its outline, the CMC ring being mounted with prestress inside the metal structure;
· at least one element (26; 156) exerting a resilient return force on the wedge-shaped part to keep it in contact with the ends of the CMC ring when the split opens under the effect of differential expansion between the annular metal structure and the CMC ring; and
· at least one element (35, 45; 159) for preventing the CMC ring from turning about its axis.

2. A turbine ring assembly according to claim 1, **characterized in that** the metal structure comprises two annular metal supports (30, 40) with the CMC ring (10) being mounted between them.

3. A turbine ring assembly according to claim 2, **characterized in that** the element exerting a resilient return force is a prestressed elastically-deformable blade (26) bearing firstly against the annular metal supports (30, 40) and secondly against the wedge-shaped part (20).

4. A turbine ring assembly according to claim 1, **characterized in that** the metal structure comprises a metal hoop (150) surrounding the outer peripheral surface of the CMC ring (110).

5. A turbine ring assembly according to claim 4, **characterized in that** the element exerting a resilient return force is a prestressed elastically-deformable tongue (156) integral with the metal hoop (150) and bearing against the wedge-shaped part (20).

6. A turbine ring assembly according to claim 5, **characterized in that** the metal structure further comprises two annular metal supports (130, 140) with the CMC ring (110) and the metal hoop (150) being mounted between them, enabling differential expansion to take place at least in a radial direction between the metal hoop (150) and the annular metal supports (130, 140).

7. A turbine ring assembly according to claim 6, **characterized in that** it includes means (160) for centering the metal hoop (150) and the CMC ring (110).

8. A turbine ring assembly according to claim 5 or claim 6, **characterized in that** the metal hoop (150) is mounted between the annular metal supports (130, 140) by means of elastically-deformable blades (160).

9. A turbine ring assembly according to any one of claims 6 to 8, **characterized in that** a sealing gasket (166) is interposed between at least one of the lateral faces of the CMC ring (110) and a facing face of one of said annular metal supports.

10. A turbine ring assembly according to any one of claims 1 to 9, **characterized in that** the wedge-shaped pat (20; 120) presents an inner end face that lies substantially in continuity with the inside peripheral surface of the CMC ring (10; 110) at the temperature to which the turbine ring assembly is normally exposed in operation.

11. A turbine ring assembly according to any one of claims 1 to 10, **characterized in that** it includes a layer (11; 111) of abradable material on the inside peripheral surface of the CMC ring (10; 110).

12. A turbine ring assembly according to any one of claims 1 to 11, **characterized in that** the material of the CMC ring (10; 110) is a self-healing ceramic matrix composite material.

13. A turbine ring assembly according to any one of claims 1 to 12, **characterized in that** the material of the CMC ring (10; 110) is provided with a coating forming an environmental barrier for protection against corrosion.

14. A turbine ring assembly according to any one of claims 1 to 13, **characterized in that** the CMC ring (10; 110) includes fiber reinforcement made by three-dimensional weaving.

15. A turbine ring assembly according to any one of claims 1 to 14, **characterized in that** the CMC ring (10; 110) and the wedge-shaped part (20; 120) are made out of the same material.

16. A gas turbine including a turbine ring assembly according to any one of claims 1 to 15.

## Patentansprüche

1. Turbinenringanordnung einer Gasturbine, umfassend:
- einen einstückigen geschlitzten Ring (10; 110) aus Keramikmatrix-Verbundwerkstoff (CMC),
- ein keilförmiges Teil (20; 120) aus CMC, das Flanken aufweist, die mit den Enden des Rings auf beiden Seiten des Schlitzes in Kontakt sind, um den Ring zu schließen,
- eine ringförmige Metalltragstruktur (30, 40; 150), die den CMC-Ring - mit diesem in Kontakt befindlich - über den größten Teil seines Umfangs umgibt, wobei der CMC-Ring mit Vorspannung in der Metallstruktur angebracht ist,
- wenigstens ein Element (26; 156), das auf das keilförmige Teil eine elastische Rückstellkraft ausübt, um es mit den Enden des CMC-Rings in Kontakt zu halten, wenn sich der Schlitz unter der Wirkung einer unterschiedlichen Ausdehnung zwischen der ringförmigen Metallstruktur und dem CMC-Ring öffnet, und
- wenigstens ein Element (35, 45; 159) zum Festlegen des CMC-Rings gegen eine Drehung um seine Achse.

2. Turbinenringanordnung nach Anspruch 1, **dadurch gekennzeichnet, daß** die Metallstruktur zwei ringförmige Metallträger (30, 40) umfaßt, zwischen denen der CMC-Ring (10) angebracht ist.

3. Turbinenringanordnung nach Anspruch 2, **dadurch gekennzeichnet, daß** das eine elastische Rückstellkraft ausübende Element ein elastisch verformbarer, vorgespannter Streifen (26) ist, der einerseits an den ringförmigen Metallträgern (30, 40) und andererseits an dem keilförmigen Teil (20) in Anlage ist.

4. Turbinenringanordnung nach Anspruch 1, **dadurch gekennzeichnet, daß** die Metallstruktur einen Metallkranz (150) umfaßt, der die Außenumfangsfläche des CMC-Rings (110) umgibt.

5. Turbinenringanordnung nach Anspruch 4, **dadurch gekennzeichnet, daß** das eine elastische Rückstellkraft ausübende Element eine elastisch verformbare, vorgespannte Zunge (156) ist, die mit dem Metallkranz (150) fest verbunden ist und sich an dem keilförmigen Teil (20) abstützt.

6. Turbinenringanordnung nach Anspruch 5, **dadurch gekennzeichnet, daß** die Metallstruktur ferner zwei ringförmige Metallträger (130, 140) umfaßt, zwischen denen der CMC-Ring (110) und der Metallkranz (150) angebracht sind, was eine unterschiedliche Ausdehnung wenigstens in radialer Richtung zwischen einerseits dem Metallkranz und andererseits den ringförmigen Metallträgern (130, 140) ermöglicht.

7. Turbinenringanordnung nach Anspruch 6, **dadurch gekennzeichnet, daß** sie Mittel (160) zum Zentrieren des Metallkranzes (150) und des CMC-Rings (110) umfaßt.

8. Turbinenringanordnung nach einem der Ansprüche 5 und 6, **dadurch gekennzeichnet, daß** der Metallkranz (150) mittels elastisch verformbarer Streifen (160) zwischen den ringförmigen Metallträgern (130, 140) angebracht ist.

9. Turbinenringanordnung nach einem der Ansprüche 6 bis 8, **dadurch gekennzeichnet, daß** eine Dichtung (166) zwischen wenigstens einer der Seitenflächen des CMC-Rings (110) und einer gegenüberliegenden Seite eines der ringförmigen Metallträger eingefügt ist.

10. Turbinenringanordnung nach einem der Ansprüche 1 bis 9, **dadurch gekennzeichnet, daß** das keilförmige Teil (20; 120) eine innere Endfläche aufweist, die bei der Temperatur, der die Turbinenringanordnung normalerweise im Betrieb ausgesetzt ist, im wesentlichen den Verlauf der Innenumfangsfläche des CMC-Rings (10; 110) fortsetzt.

11. Turbinenringanordnung nach einem der Ansprüche 1 bis 10, **dadurch gekennzeichnet, daß** sie auf der Innenumfangsfläche des CMC-Rings (10; 110) eine Schicht aus Abriebmaterial (11; 111) aufweist.

12. Turbinenringanordnung nach einem der Ansprüche 1 bis 11, **dadurch gekennzeichnet, daß** das Material des CMC-Rings (10; 110) ein Verbundwerkstoff mit selbstheilender Keramikmatrix ist.

13. Turbinenringanordnung nach einem der Ansprüche 1 bis 12, **dadurch gekennzeichnet, daß** das Material des CMC-Rings (10; 110) mit einer Beschichtung versehen ist, die eine Umgebungsbarriere zum Schutz gegen Korrosion bildet.

14. Turbinenringanordnung nach einem der Ansprüche 1 bis 13, **dadurch gekennzeichnet, daß** der CMC-Ring (10; 110) eine durch dreidimensionales Weben gebildete Faserverstärkung umfaßt.

15. Turbinenringanordnung nach einem der Ansprüche 1 bis 14, **dadurch gekennzeichnet, daß** der CMC-Ring (10; 110) und das keilförmige Teil (20; 120) aus dem gleichen Material gefertigt sind.

16. Gasturbine, die eine Turbinenringanordnung nach einem der Ansprüche 1 bis 15 umfaßt.
